(19) 

**Europäisches Patentamt**

**European Patent Office**

**Office européen des brevets**

(11) **EP 1 595 596 B1**

(12) **EUROPÄISCHE PATENTSCHRIFT**

(45) Veröffentlichungstag und Bekanntmachung des Hinweises auf die Patenterteilung:
**15.08.2012 Patentblatt 2012/33**

(51) Int Cl.:
***B01J 8/02*** *(2006.01)*

(21) Anmeldenummer: **05101846.3**

(22) Anmeldetag: **10.03.2005**

(54) **Reaktor mit einem Gas/Flüssigkeit-Verteiler mit einem statischen Mischer**

Reactor with a gas/liquid distributor with a static mixer

Réacteur avec un distributeur pour gaz/liquide avec un mélangeur statique

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **29.04.2004 DE 102004021128**

(43) Veröffentlichungstag der Anmeldung:
**16.11.2005 Patentblatt 2005/46**

(73) Patentinhaber: **Evonik Oxeno GmbH**
**45772 Marl (DE)**

(72) Erfinder:
• **Grund, Gerda, Dr.**
**48249 Dülmen (DE)**

• **Jelko, Stefan**
**45721 Haltern am See (DE)**
• **Büschken, Wilfried, Dr.**
**45721 Haltern am See (DE)**
• **Peters, Udo, Dr.**
**45770 Marl (DE)**

(74) Vertreter: **Hirsch, Hans-Ludwig et al**
**Evonik Degussa GmbH**
**DG-IPM-PAT - Bau 1042 / PB 15**
**Paul-Baumann-Strasse 1**
**45764 Marl (DE)**

(56) Entgegenhaltungen:
**WO-A-00/53307         WO-A-2005/014161**
**US-A1- 2002 127 160**

**Beschreibung**

Die Erfindung betrifft die kontinuierliche/semikontinuierliche Durchführung einer Reaktion zwischen einer Flüssigkeit und einem Gas an einem im Festbett angeordneten festen Katalysator in einem Reaktor, der im Gleichstrom durchströmt wird und mit einer speziellen Misch- und Verteilungsvorrichtung für die Einsatzstoffe ausgerüstet ist.

Reaktionen, an denen drei Phasen Gas, Flüssigkeit und Feststoff beteiligt sind, kommen in der chemischen Praxis häufig vor. In den meisten Fällen liegt der Katalysator als Feststoff vor und die Reaktanden sind auf die Gas- und Flüssigphase verteilt. Erfolgt die Reaktion an der katalytischen Oberfläche des Feststoffes wird die Reaktionsgeschwindigkeit sowohl durch den Stoffübergang Gas/Flüssigkeit als auch dem zwischen Flüssigkeit und Feststoff beeinflusst. Die Stofübergänge und die chemischen Reaktionen sind dabei als nacheinander ablaufende Schritte zu betrachten. Jeder dieser Schritte kann der geschwindigkeitsbestimmende Schritt sein.

Häufig treten in chemischen Prozessen komplexe Reaktionsnetzwerke auf. Dann können sowohl Parallel- als auch Folgereaktionen gleichzeitig ablaufen. Bei derartigen Prozessen spielt die Selektivität hinsichtlich des Zielproduktes eine besonders wichtige Rolle. Der Umsatz und die Selektivität des Zielproduktes hängen nicht nur von der Reaktionskinetik (abhängig u. a. von der Temperatur und dem Druck), sondern auch von der Hydrodynamik des gewählten Reaktors ab.

Die industriell eingesetzten Dreiphasen-Reaktoren unterscheiden sich im Wesentlichen durch die Bewegungsform der Phasen. So ist zwischen Suspensionsreaktoren (Rührkessel bzw. Blasensäule), Wirbelbetten und Festbetten (Sumpfreaktor bzw. Rieselreaktor) zu unterscheiden.

Im Festbettreaktor ist der Katalysator in Form einer Füllkörperschüttung angeordnet. Hinsichtlich der Fahrweise ist hier zwischen einem Sumpfreaktor und einem Rieselreaktor zu unterscheiden. Im Sumpfphasenreaktor ist die Strömungsgeschwindigkeit der flüssigen Phase gering. Das Reaktionsgas wird im Gleich- oder Gegenstrom in flüssiger Phase von unten nach oben durch den Reaktor geleitet (Baems, Hofmann, Renken "Chemische Reaktionstechnik", Georg Thieme Verlag Stuttgart, 1999, S. 264-267).

Im Dreiphasenreaktor (sog. three-phase trickle-bed reactor) wird die flüssige Phase von oben nach unten geführt. Die Gasphase kann in der gleichen oder entgegengesetzten Richtung wie die flüssige Phase strömen. Meistens werden beide Phasen (Gas und Flüssigkeit) von oben nach unten im Gleichstrom geführt. Dreiphasenreaktoren können dabei in verschiedenen Betriebsfahrweisen, die nachfolgend beschrieben werden, betrieben werden. In Abhängigkeit von der gewählten Flüssigkeit- und Gasgeschwindigkeit stellen sich unterschiedliche Betriebsbereiche ein. Bei kleinen Flüssigkeitsgeschwindigkeiten rieselt die Flüssigkeit in dünnen Filmen herab und die ebenfalls relativ kleine abwärts gerichtete Gasströmung erfolgt kontinuierlich, es stellt sich die sog. Rieselfahrweise oder "trickle flow" ein. Bei steigender Gasgeschwindigkeit und gleich bleibender relativ geringen Flüssigkeitsgeschwindigkeit erreicht man den Bereich "spray flow" (Sprühfahrweise). Bleibt dagegen die Gasgeschwindigkeit relativ klein bei deutlich gestiegener Flüssigkeitsgeschwindigkeit befindet man sich im "bubble flow". Erhöht man gleichzeitig die Geschwindigkeiten beider Phasen erreicht man die pulsierende Fahrweise ("pulse flow"). Diese Betriebsweisen weisen sehr charakteristische und sehr unterschiedliche hydrodynamische Parameter auf, die insbesondere einen Einfluss auf die Stofübergänge haben. Der Umsatz und die Selektivitäten der Reaktionen, die in Dreiphasen-Reaktoren durchgeführt werden, hängen gleichermaßen von der Kinetik, dem Druck, der Temperatur und der Hydrodynamik des Reaktor ab (Ullmann's Encyclopedia of Industrial Chemistry, Vol. B4, S.309-320).

Bei technischen Reaktoren, deren Durchmesser entsprechend groß ist, spielt die Verteilung der Edukte (Flüssigkeit (Edukt 1), Gas (Edukt 2 )) über den gesamten Querschnitt der Katalysatorschüttung eine entscheidende Rolle. Eine zusätzliche Herausforderung stellen Reaktionen dar, wenn das Gas nur im begrenzten Maße in der Flüssigkeit löslich ist, die Reaktion aber ausschließlich zwischen der flüssigen Phase und dem festen Katalysator stattfindet. In diesen Fällen muss gleichzeitig mit dem Reaktionsfortschritt (in der flüssigen Phase) das Edukt 2 aus der Gasphase in die Flüssigkeit transportiert werden. Dies setzt voraus, dass an jeder Stelle im Reaktor sowohl Flüssigkeit als auch Gas in ausreichenden Mengen vorhanden sind d. h. beide Reaktionspartner sowohl in radialer als auch in axialer Richtung optimal verteilt sind. In solchen Fällen wird eine Vergleichmäßigung der Strömungsgeschwindigkeiten über die gesamte Querschnittsfläche des Reaktors angestrebt.

Dreiphasenreaktoren werden zudem meistens adiabatisch betrieben, d.h. die Temperatur ändert sich mit fortschreitendem Umsatz infolge der freiwerdenden bzw. aufgenommenen Reaktionswärme, die mangels externem Wärmeaustausches entsprechend steigt bzw. sinkt. Damit eine homogene Temperaturverteilung im Reaktor erreicht wird, ist ebenfalls eine gleichmäßige Verteilung der Edukte wünschenswert.

Um eine möglichst gute Vermischung der Edukte bei gleichzeitig gleichmäßiger Verteilung der Einsatzstoffe auf der Katalysatorfläche zu erreichen, werden in der Technik verschiedene Maßnahmen realisiert. Es kann über dem Katalysator eine Inertschicht aufgebracht werden, die aus Füllkörper z. B. aus Raschig-Ringen oder Kugeln besteht, die für eine gleichmäßige Verteilung der Flüssigkeit und der Gasphase über den Katalysatorquerschnitt sorgen soll.

Eine andere Möglichkeit besteht darin, die Verteilung der Edukte auf die oberste Schicht des Katalysators mit Hilfe von Verteilerböden wie beispielsweise Lochplatten durchzuführen. Eine Kombination beider o. g. technischen Maßnahmen ist ebenfalls möglich.

In US 5 882 610 und US 6 093 373 wird ein Misch- und Verteilungssystem beschrieben, das aus einer Lochplatte, bei dem jedes Loch mit einem nach oben stehenden Rohr mit seitlichen Bohrungen versehen ist, und aus einem freien Raum zwischen Lochplatte und Katalysatorschicht besteht. Der Raum zwischen Katalysator und Lochplatte hat eine Höhe zwischen 0 und 10 cm. Der Durchmesser der Rohre ist gleich oder kleiner als die Hälfte des Abstands zwischen Lochplatte und Katalysatorschicht. Die Anzahl der Rohre pro Quadratmeter beträgt 100 bis 700. Die Gas- und die Flüssigphase werden in den Rohren und im Zwischenraum vermischt, bevor sie die Katalysatorschicht durchströmen. Es wird dargelegt, dass mit Hilfe der beanspruchten Vorrichtung die Vermischung von Gas und Flüssigkeit sowie die Gleichmäßigkeit der Belastung der Katalysatoroberfläche mit den Edukten verbessert wird. Beispiele für einen Effekt bei der Durchführung chemischer Reaktionen werden aber nicht gegeben. Die Höhe der verwendeten Reaktoren beträgt jeweils 4 m bei einem Durchmesser von 400 mm.

Ein hohes Verhältnis der Länge des Reaktors bzw. Länge der Reaktionszone zum Durchmesser ist typisch für Dreiphasenreaktoren. So wird generell für diese Art von Reaktoren ein Verhältnis von größer 5, bevorzugt von 5 bis 25 (Ullmann's Encyclopedia of Industrial Chemistry, Vol. B4, S.310) vorgeschlagen.

Aufgabe der vorliegenden Erfindung war es, Dreiphasenreaktoren bereitzustellen, die auch mit einem Schlankheitsgrad des Reaktors (Definition: Verhältnis der Länge der Reaktionszone (Katalysatorpackung) zum Durchmesser der Reaktionszone (Reaktor-Durchmesser)) von kleiner 3 betrieben werden können. Dadurch soll auch bei Auslegung des Reaktors für eine hohe Kapazität (durch Vergrößerung des Durchmessers des Reaktors) verhindert werden, dass der Reaktor eine große Höhe aufweisen muss, da hohe Reaktoren unter anderem besondere Anforderungen an die Statik erfordern.

Überraschenderweise wurde gefunden, dass ein Reaktor mit einem Verteilerboden oberhalb des Festbettkatalysators, der mit Statikmischern ausgestattet ist, eine ausreichend gute axiale und radiale Verteilung und Durchmischung der Edukte auch bei einem Schlankheitsgrad kleiner 3 erzielen kann. Es wurde außerdem gefunden, dass bei der Umsetzung einer Flüssigkeit mit einem Gas an einem im Festbett angeordneten Katalysator, der im Gleichstrom durchströmt wird, die Selektivität der Bildung des Zielproduktes erhöht werden kann, wenn das Gas und die Flüssigkeit mit Hilfe eines Verteilerbodens mit Statikmischern gemischt/dispergiert und auf die Katalysatoroberfläche gleichmäßig verteilt werden.

Gegenstand der vorliegenden Erfindung ist deshalb ein Reaktor zur Durchführung von Reaktionen, bei denen zumindest drei Phasen vorliegen und zumindest ein gasförmiges Edukt und ein flüssiges Edukt im Gleichstrom an einem im Festbett angeordneten Katalysator zu einem Produkt umgesetzt werden, wobei der Reaktor zumindest eine Zone aufweist, in welcher der Katalysator im Festbett vorliegt und eine von dieser Zone durch einen Löcher aufweisenden Verteilerboden, dessen Größe dem Reaktorquerschnitt entspricht, abgetrennte Zone aufweist, in welcher die flüssigen und gasförmigen Edukte in den Reaktor eintreten, der dadurch gekennzeichnet ist, dass der Verteilerboden Statikmischer aufweist, die auf zumindest einer Seite des Verteilerbodens in den Löchern angeordnet sind.

Ebenso ist Gegenstand der vorliegenden Erfindung ein Verfahren bei dem im Reaktor zumindest drei Phasen vorliegen, wobei zumindest ein Edukt gasförmig, ein Edukt flüssig und der Katalysator im Festbett und der Reaktor im Gleichstrom von den Edukten durchströmt wird, welches dadurch gekennzeichnet ist, dass es in einem erfindungsgemäßen Reaktor durchgeführt wird.

Der erfindungsgemäße Reaktor weist den Vorteil auf, dass eine ausreichend gute Edukt-Verteilung in dem Dreiphasenreaktor erreicht werden kann, unabhängig von der Komplexität der durchzuführenden Reaktion, unabhängig von der gewählten Betriebsfahrweise bei der das Verfahren im Dreiphasenreaktor durchgeführt wird ("spray flow", "bubble flow", "trickle flow" oder "pulse flow") und unabhängig von der Löslichkeit des Gases im Reaktionsgemisch. Der Einsatz des erfindungsgemäßen Reaktors ist auch bzw. insbesondere beim Vorliegen von Reaktionsnetzwerken möglich. Die gute Edukt-Verteilung wird dabei auch in Reaktoren mit relativ kleinen Schlankheitsgraden (d. h. großen Durchmessern) erreicht.

Durch den erfindungsgemäßen Reaktor wird das Hochskalieren von Laborversuchen in großtechnische Anlagen vereinfacht, da es jetzt nicht mehr notwendig ist, Reaktoren mit einem Schlankheitsgrad von größer 5 zu verwenden, was bei hohen Durchsätzen bisher zu der Notwendigkeit geführt hat sehr hohe Reaktoren zu konstruieren oder mehrere kleiner Reaktoren vorzusehen, die parallel betrieben werden.

Je nach durchgeführter Reaktion ist es durch Einsatz des erfindungsgemäßen Reaktors sogar möglich trotz einer deutlichen Vergrößerung des Reaktor-Durchmessers eine verbesserte Selektivitäten hinsichtlich des Zielproduktes zu erreichen.

Im Rahmen der vorliegenden Erfindung wird unter Flüssigkeit ein Stoff oder Stoffgemisch verstanden, der/das im Reaktor unter Reaktionsbedingungen im flüssigen Aggregatzustand vorliegt und mindestens ein Edukt aufweist. Unter Gas wird ein reines Gas oder ein Gasgemisch, das zumindest ein Edukt und ggf. ein Inertgas aufweist, verstanden. Ein Beispiel für ein Gas das zwei Edukte aufweist ist Synthesegas, das bei Hydroformylierungsreaktionen eingesetzt wird.

Der erfindungsgemäße Reaktor und das erfindungsgemäße Verfahren werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Weglassen von einzelnen Werten (Bereichen) oder Verbindungen erhalten werden können.

Der erfmdungsgemäße Reaktor zur Durchführung von Reaktionen, bei denen zumindest drei Phasen vorliegen und zumindest ein gasförmiges Edukt und ein flüssiges Edukt im Gleichstrom an einem im Festbett angeordneten Katalysator zu einem Produkt umgesetzt werden, wobei der Reaktor zumindest eine Zone aufweist, in welcher der Katalysator im Festbett vorliegt und eine von dieser Zone durch einen Löcher aufweisenden Verteilerboden, dessen Größe dem Reaktorquerschnitt entspricht, abgetrennte Zone aufweist, in welcher die flüssigen und gasförmigen Edukte in den Reaktor eintreten, zeichnet sich dadurch aus, dass der Verteilerboden Statikmischer aufweist, die auf zumindest einer Seite des Verteilerbodens in den Löchern angeordnet sind. Die Statikmischer können dabei auf die Löcher aufgeschweißt sein oder in den Löchern eingeschweißt sein. Der erfindungsgemäße Verteilerboden im Reaktor weist dabei Löcher auf, in oder an die Statikmischer in der Weise angeordnet sind, dass ein Reaktionsgemisch um von einer Seite des Verteilerbodens auf die andere Seite des Verteilerbodens zu gelangen durch zumindest einen Statikmischer hindurchtreten muss. Wichtig ist, dass die Edukte bzw. das gesamte Reaktionsgemisch nicht durch den Verteilerboden gelangen darf, ohne einen Statikmischer durchlaufen zu haben. Es kann vorteilhaft sein, wenn nicht nur ein Verteilerboden in dem erfmdungsgemäßen Reaktor vorhanden ist, sondern mehrere. Dabei können mehrere Verteilerböden oberhalb des im Festbett vorliegenden Katalysators vorhanden sein. Es können aber auch mehrere Festbettkatalysatoren (Reaktionszonen) im Reaktor vorliegen, und jeweils vor einer solchen Zone kann ein erfindungsgemäßer Verteilerboden vorhanden sein.

In einer beispielhaften Ausführungsform des erfindungsgemäßen Reaktors weist dieser zwei der erfindungsgemäßen Verteilerböden in Strömungsrichtung auf und hat den folgenden Aufbau: 1. Leerraum, 1. Verteilerboden mit Statikmischern, 1. Katalysatorschicht, 2. Leerraum, 2.Verteilerboden mit Statikmischern, 2. Katalysatorschicht, (ggf. 3. Leerraum). Das Einspeisen der Edukte erfolgt vorzugsweise in den 1. Leerraum. Im zweiten Leerraum nach der ersten Katalysatorschicht kann je nach Bedarf Flüssigkeit und/oder Gas als Edukte oder Lösemittel oder Inertgas eingespeist oder ein Teil des Reaktionsgemisches entnommen werden. Im gegebenenfalls vorhandenen 3. Leerraum wird die Reaktionsmischung aus dem Reaktor abgenommen.

Der Verteilerboden kann direkt (ohne Abstand) in Strömungsrichtung vor der Reaktionszone vorhanden sein. Ebenso ist es möglich, dass zwischen dem Verteilerboden und der Festbettkatalysatorzone (Reaktionszone) ein Raum vorgesehen ist, der bevorzugt eine Höhe von 0,1 bis 20 % der Höhe der nachfolgenden Reaktionszone aufweist. Der Raum kann dabei ohne Einbauten sein oder aber eine Inertschicht aus Füllkörpern aufweisen, die mit keinem der im Reaktionsgemisch vorhandenen Komponenten eine chemische Reaktion eingeht. Die Höhe der Inertschicht (Füllkörperschicht) beträgt vorzugsweise von 0,1 bis 500 mm, insbesondere von 100 bis 300 mm. Als Füllkörper können handelsübliche, ungeordnete Füllkörper z. B. Zylinder, Kugeln, Ringe usw. aus inertem Material eingesetzt werden. Zum Beispiel können die Füllkörper Interpack 15mm der Firma VFF eingesetzt werden.

Die Anzahl der Statikmischer beträgt vorzugsweise 70 bis 500, vorzugsweise 120 bis 280 je Quadratmeter des Reaktorquerschnitts bzw. des Verteilerbodens. Vorzugsweise sind die Statikmischer gleichmäßig über den Verteilerboden verteilt. Diese sind vorzugsweise so angeordnet, dass drei benachbarte Statikmischer in Form eines gleichseitigen Dreiecks angeordnet sind.

In dem erfindungsgemäßen Reaktor können Verteilerböden eingesetzt werden, die Statikmischer unterschiedlicher Bauart aufweisen. Einsetzbare Statikmischer können z. B. bei den Firmen Kenics, Koch oder Sulzer bezogen werden.

Die auf/in einem bestimmten Verteilerboden montierten Statikmischer sollten alle den gleichen Effekt bewirken, nämlich optimale Lösung des Gases in der Flüssigkeit, gleichmäßige Vermischung der Phasen und gleichmäßige Aufteilung der Mischung über den gesamten Reaktor- bzw. Festbettkatalysatorquerschnitt zu erreichen. Dazu ist es zweckmäßig, auf einem bestimmten Verteilerboden Statikmischer gleicher Bauart und gleicher Dimension zu montieren. Optional können in den Randzonen Statikmischer andere Dimensionen/Bauart eingesetzt werden. Ist mehr als ein Verteilerboden im Reaktor vorhanden, so können die Verteilerböden gleiche oder unterschiedliche Statikmischer aufweisen.

Der Durchmesser der Statikmischer richtet sich nach der erforderlichen Leerrohrgeschwindigkeit im Reaktor und der gewünschten Blasengröße. Beispielsweise werden bei einer Flüssigkeitsleerrohrgeschwindigkeit von 80 bis 600 $m^3/m^2/h$ entsprechend 60 bis 250 Mischelementen pro Quadratmeter Reaktorquerschnittsfläche mit Statikmischer kleiner gleich DN25, bevorzugt DN20 eingesetzt.

Die Statikmischer sind vorzugsweise gleichmäßig angeordnet, beispielsweise quadratisch oder rautenförmig. Besonders bevorzugt wird eine Anordnung, bei der drei gegenseitig benachbarte Statikmischer ein gleichseitiges Dreieck bilden, d. h. benachbarte Statikmischer haben den gleichen Abstand. Der Abstand zwischen zwei benachbarten Statikmischern (von Mittelpunkt zu Mittelpunkt) beträgt vorzugsweise 50 bis 120 mm, bevorzugt 60 bis 90 mm. Die Anzahl der Statikmischer je Quadratmeter beträgt vorzugsweise von 20 bis 500, bevorzugt von 100 bis 280.

Die Statikmischer sind derart in dem Verteilerboden integriert, dass sie nach Einbau des Verteilerbodens in den Reaktor sowohl nach unten als auch nach oben aus dem Verteilerboden herausragen oder bündig mit dem Verteilerboden abschließen.

Der erfindungsgemäße Reaktor kann z. B. ein Behälter in Form einer Säule sein. Der Querschnitt des Reaktors kann dreieckig, rechteckig, quadratisch, vieleckig, elliptisch oder bevorzugt kreisförmig sein. Der Schlankheitsgrad ist dabei wie oben defmiert als das Verhältnis von Höhe der Reaktionszone zum Durchmesser der Reaktorzone. Bei nicht kreisförmigen Reaktorquerschnitt wird aus der Querschnittsfläche ein Quasidurchmesser d berechnet, der dem Durchmesser eines Kreises mit der gleichen Querschnittsfläche entspräche.

Durch den relativ kleinen Schlankheitsgrad ist es möglich auch Reaktoren mit Durchmessern von bis zu 5 m, vorzugsweise mit Durchmessern von 1 bis 3 m zur Durchführung von Dreiphasenreaktionen einzusetzen.

Der erfmdungsgemäße Reaktor kann in allen Betriebsbereichen der Fahrweise eines Dreiphasenreaktors eingesetzt werden. Der erfmdungsgemäße Reaktor ist insbesondere zur Durchführung von einem Mehrphasenreaktionsverfahren geeignet, bei dem im Reaktor zumindest drei Phasen vorliegen, wobei zumindest ein Edukt gasförmig, ein Edukt flüssig und der Katalysator im Festbett und der Reaktor im Gleichstrom von den Edukten durchströmt wird, wobei in dem Verfahren zumindest ein erfindungsgemäßer Reaktor eingesetzt wird. Besonders bevorzugt wird der Reaktor im Gleichstrom bevorzugt von oben nach unten durchströmt.

Besonders bevorzugt wird das erfindungsgemäße Verfahren so durchgeführt, dass nach Austritt aus den Statikmischern der mittlere Sauterdurchmesser der in der Flüssigkeit dispergierten Gasblasen kleiner 5 mm, bevorzugt kleiner 3 mm und besonders bevorzugt kleiner 1 mm beträgt.

In einem erfindungsgemäßen Reaktor können verschiedene Reaktionsarten, die zwischen einer Flüssigkeit und einem Gas an einem festen im Festbett angeordneten Katalysator ablaufen, durchgeführt werden, wie z. B. Oxidationen, Epoxidierungen von Olefmen (z. B. Propylen mit Wasserstoffperoxid), Carbonylierungen, Hydroformylierungen, Aminierungen, Ammonoxidationen, Oximierungen und Hydrierungen. Alle diese Verfahren, durchgeführt in einem erfindungsgemäßen Reaktor sind ebenfalls Gegenstand der vorliegenden Erfindung.

Besonders bevorzugt ist das erfmdungsgemäße Verfahren eine Selektivreaktion zwischen einer Flüssigkeit und einem Gas. Selektivreaktionen, die mit Hilfe der erfindungsgemäßen Vorrichtung durchgeführt werden, sind beispielsweise folgende Selektivhydrierungen:

Herstellung von Olefinen aus Acetylenderivaten
Herstellung von Olefinen mit mindestens einer isolierten Doppelbindung aus konjugierten Olefinen
Herstellung von gesättigten Ketonen aus ungesättigten Ketonen
Herstellung von gesättigten Aldehyden aus ungesättigten Aldehyden
Herstellung von gesättigten Nitrilen aus ungesättigten Nitrilen

Ganz besonders bevorzugt ist das erfindungsgemäße Verfahren eine Hydrierung oder Hydroformylierung.

Das erfindungsgemäße Verfahren kann insbesondere zur Durchführung von Reaktionen eingesetzt werden, bei denen die Löslichkeit des als Edukt eingesetzten Gases in der als Edukt eingesetzten Flüssigkeit unter Reaktionsbedingungen unzureichend ist, um den erforderlichen Umsatz der Reaktanden herbeizuführen.

Das erfindungsgemäße Verfahren kann in einem oder mehreren Reaktoren durchgeführt werden, wobei zumindest einer der Reaktoren ein erfindungsgemäßer Reaktor ist. Bei der Umsetzung in mehreren Reaktoren sind diese in Reihe oder parallel oder sowohl in Reihe als auch parallel angeordnet. Bei der parallelen Verschaltung mehrer Reaktoren muss sichergestellt sein, dass das Reaktionsgemisch zumindest einmal einen erfindungsgemäßen Reaktor durchläuft. Die einzelnen Reaktoren werden im geraden Durchgang oder unter Rückführung eines Teils des Reaktoraustrags (Schlaufenfahrweise) betrieben.

Als Beispiel für ein erfinderisches Verfahren soll ein Verfahren zur Umsetzung einer Flüssigkeit mit einem Gas an einem heterogenen Katalysator in einem Festbettreaktor, der im Gleichstrom durchströmt wird, genannt werden, das sich für Prozesse, bei denen Reaktionsnetzwerke auftreten, trotz der deutlichen Vergrößerung des Reaktor-Durchmessers durch verbesserte Selektivitäten hinsichtlich des Zielproduktes auszeichnet.

Erfindungsgemäß wird die Umsetzung eines Gases mit einer Flüssigkeit in einem Reaktor durchgeführt, der durch die Trennung mit zumindest einem Verteilerboden, der Statikmischer aufweist, zumindest zwei Räume aufweist. Die im ersten Raum eingeleiteten Einsatzstoffe, Gas und Flüssigkeit, können ausschließlich durch die Statikmischer in den zweiten Raum, in dem sich die Festbettkatalysatorschüttung befindet, gelangen. Am Ende der Katalysatorzone befinden sich entweder direkt ein, zwei oder mehrere Abzugsvorrichtung(en) für das Reaktionsgemisch oder für die Flüssigkeit und für das Gas aus dem Reaktionsgemisch oder es ist nach der Katalysatorzone zumindest ein weitere Raum vorhanden, aus dem das Reaktionsgemisch gemeinsam oder nach Gas und Flüssigkeit getrennt, aus dem Reaktor entfernt wird oder über einen weiteren Verteilerboden, der ebenfalls Statikmischer aufweisen kann in eine weitere Reaktionszone überführt wird, wobei ein Teil des Reaktionsgemisches aus diesem Raum entfernt werden kann oder weitere Edukte in diesen Raum eingespeist werden können.

Das erfmdungsgemäße Verfahren kann insbesondere für die Durchführung von selektiv durchzufährenden Reaktionen eingesetzt werden. Bei derartigen Reaktionen ist es wichtig, dass neben einem entsprechenden Umsatz vor allem hohe Selektivität hinsichtlich des Zielproduktes erreicht werden, d. h. dass der Anteil des gewünschten Produktes, im Vergleich zu den übrigen Produkten, die in den Folge- und/oder Parallelreaktionen gebildet werden, hoch ist.

Bei Reaktionen die stark exotherm oder endotherm sind, können in einem Dreiphasensystem neben Stofftransport- auch Wärmetransportlimitierungen auftreten. Daher gilt es, äußere und/oder innere Transportvorgänge zu optimieren und quasi isotherme Verhältnisse zwischen den Phasen zu schaffen. Der erfindungsgemäße Reaktor mit seinem erfindungsgemäßen Verteilerboden hilft dabei maßgebend beim Einhalten der seitens des Stoff- und Wärmetransportes geforderten radialen und axialen Verteilung der Reaktionspartner.

Nachfolgend wird das erfindungsgemäße Verfahren anhand einer speziellen Ausführungsform beispielhaft beschrieben. Die spezielle Ausführungsform des Verfahrens der vorliegenden Erfindung betrifft die Durchführung der Selektivhydrierung von Butadienen zu 1-Buten oder zu 2-Butenen oder zu einem Gemisch linearer Butene. Bei dieser Ausführungsform werden Butadien oder Butadien-haltige Ströme zu linearen Butenen oder Gemischen mit linearen Butenen hydriert.

Als flüssigphasige Edukte können technische $C_4$-Schnitte, wie z. B. $C_4$-Schnitte eines Steamreformers oder einer FCC-Einheit (Fluid Catalytic Cracker), die mehrfach ungesättigte Kohlenwasserstoffe, wie Butadien und Acetylenderivate, einfache Olefine, wie 1-Buten, 2-Butene, i-Buten sowie gesättigte Kohlenwasserstoffe, wie i-Butan und n-Butan, enthalten können, eingesetzt werden.

Abhängig von seiner Herkunft kann das eingesetzte flüssige Edukt von 5 bis 100 Gew.-%, insbesondere von 30 bis 75 Gew.-% und ganz besonders bevorzugt von 30 bis 60 Gew.-% an mehrfach ungesättigten Kohlenwasserstoffen aufweisen. Beispielsweise liegt der Gehalt an 1,3-Butadien in der $C_4$-Fraktion eines Steamcrackers häufig bei ca. 45 Gew. %. Optional kann mit Hilfe des erfindungsgemäßen Verfahrens auch reines Butadien, falls es kostengünstig verfügbar wäre, selektiv zu n-Butenen hydriert werden. Das Einsatzkohlenwasserstoffgemisch kann trocken oder gegebenenfalls feucht eingesetzt werden.

Um eine hohe Selektivität der Bildung von linearen Butenen zu erreichen, kann es vorteilhaft sein, die Konzentration an mehrfach ungesättigten Kohlenwasserstoffen, vorwiegend 1,3-Butadien, im Eduktzulauf zu begrenzen. Die Zulaufkonzentrationen der mehrfach ungesättigten $C_4$-Verbindungen in den flüssigen Phasen sollte vorzugsweise kleiner 20 Gew.-%, bevorzugt von 5 bis 15 Gew.-% und besonders bevorzugt von 5 bis 10 Gew.-% betragen. Bei Einsatzströmen mit einer höheren Konzentration kann die Konzentration durch Zusatz eines Lösemittels gesenkt werden. Als Lösemittel können die abgekühlten Reaktionsausträge der verschiedenen Reaktoren, insbesondere der des gleichen Reaktors verwendet werden, d. h. die Schlaufenfahrweise des Reaktors ist zu bevorzugen. Es kann jedoch auch mit anderen Lösemitteln, die frei oder arm an mehrfach ungesättigten Kohlenwasserstoffen sind, verdünnt werden. Beispielsweise könnte Raffinat I, ein nahezu Butadien-freier $C_4$-Kohlenwasserstoffstrom, verwendet werden. Besonders bevorzugt wird der flüssige Eduktstrom vor dem Eintritt in einen ersten Reaktor mit einem weiteren Strom so abgemischt wird, dass ein Butadien-haltiger Strom erhalten wird, der kleiner als 20 Gew.-% an Butadien aufweist.

Bei Einhaltung einer Konzentration an mehrfach ungesättigten Kohlenwasserstoffen im Eduktzulauf von kleiner 20 Gew.-% kann das im Eingangsstrom enthaltene Butadien mit hoher Selektivität zu Butenen hydriert werden. Die Buten-Selektivität ($S_{Butene}$) ist wie folgt definiert:

$$S_{Butene} = \frac{\text{Umsatz zu Butenen}}{\text{Gesamtumsatz an Butadien}} * 100$$

und kann auf diese Weise Werte von mindestens 97 % erreichen.

Für die selektive Butadien-Hydrierung werden bevorzugt Trägerkatalysatoren eingesetzt, die mindestens ein Metall der achten Nebengruppe des Periodensystems der Elemente als aktive Komponente sowie ein Trägermaterial aufweisen. Ein bevorzugtes Metall ist Palladium. Die Metallkonzentrationen im Trägerkatalysator beträgt bevorzugt von 0,1 bis 2,0 Gew.-%, vorzugsweise von 0,2 bis 1,0 Gew.-%. Als Trägermaterialien können beispielsweise MgO, $Al_2O_3$, $SiO_2$, $TiO_2$, $SiO_2/Al_2O_3$, $CaCO_3$ oder Aktivkohle verwendet werden. Bevorzugte Trägermaterialien sind $Al_2O_3$ und $SiO_2$. Für die Hydrierung werden insbesondere Schalenkatalysatoren eingesetzt, d. h., dass sich die hydrieraktiven Stoffe in der Randzone des Katalysatorkörpers befinden. Besonders bevorzugt wird in dem erfindungsgemäßen Verfahren als Katalysator ein Palladium aufweisender Katalysator eingesetzt.

Die Katalysatoren werden bevorzugt in einer Form eingesetzt, in der sie einen geringen Strömungswiderstand bieten, z. B. in Form von Granalien, Pellets oder Formkörpern wie Tabletten, Zylindern, Kugeln, Strangextrudaten oder Ringen.

Werden mehr als ein Reaktor bzw. mehr als eine Reaktionszone im erfindungsgemäßen Verfahren eingesetzt, so können in den einzelnen Reaktoren bzw. Reaktionszonen gleiche oder verschiedene Katalysatoren eingesetzt werden.

Der zur Hydrierung verwendete Wasserstoff kann rein sein oder bis zu 50 Vol. % Inertgase (Gase, die weder mit den Edukten und/oder dem Produkt reagieren noch die Aktivität des Katalysators verändern) aufweisen. Inertgase können beispielsweise Stickstoff oder Methan, nicht jedoch Kohlenmonoxid sein. Der Gehalt an Kohlenmonoxid im Wasserstoff sollte wegen seiner durch ihn häufig bewirkten Herabsetzung der Katalysatoraktivität im Bereich weniger Vol.-ppm, vorzugsweise weniger als 10 Vol.-ppm liegen. Im erfindungsgemäßen Verfahren wird bevorzugt Wasserstoff mit einer Reinheit größer 99,5 Vol. % eingesetzt.

Die selektive Hydrierung gemäß der bevorzugten Ausführungsform des Verfahrens der vorliegenden Erfindung wird vorzugsweise bei einer Temperatur in der Reaktionszone von 0 bis 150 °C, bevorzugt von 25 bis 80 °C durchgeführt. Diese mittleren Hydriertemperaturen können bei der Verwendung mehrerer Reaktoren in diesen Reaktoren gleich oder verschieden sein.

Der als Edukt eingesetzte Butadien-haltige Strom stellt die flüssige Phase in dem Dreiphasensystem dar. Daher werden derartige Hydrierungen vorzugsweise bei einem Druck von 5 bis 50 bar, bevorzugt von 5 bis 30 bar und ganz besonders bevorzugt von 5 bis 20 bar durchgeführt. Der Druck kann in den Reaktoren gleich oder verschieden sein. Der Druck, gemessen am Kopf der Reaktoren, ist eine Funktion der Hydriertemperatur, des Mengenverhältnisses von Wasserstoff zum Einsatzgemisch sowie des Anteiles der mehrfach ungesättigten Verbindungen im Reaktorzulauf.

Die Löslichkeit des Wasserstoffes im $C_4$-Kohlenwasserstoffgemisch ist druckabhängig, bei höherem Druck löst sich mehr Wasserstoff als bei niedrigem Druck.

Für die selektive Hydrierung von Butadien-haltigen Strömen wird in einer bevorzugten Ausführungsform des erfindungsgemäßen Verfahrens weniger Wasserstoff angeboten als zu vollständigen Hydrierung der mehrfach ungesättigten Verbindungen zu den entsprechenden Monoolefinen notwendig wäre. Angeboten wird im 1. Reaktor das 0,1 bis 0,9-fache an Wasserstoff im Vergleich zur stöchiometrisch notwendigen Menge. Im Falle einer zweistufigen Anlage wird auch im 2. Reaktor ein stöchiometrischer Unterschuss an Wasserstoff eingestellt. Als gasförmiges Edukt zur selektiven Hydrierung wird deshalb vorzugsweise weniger als die stöchiometrisch notwendige Menge an Wasserstoff zugeführt.

Wie bereits beschrieben kann die selektive Hydrierung des Butadien-haltigen, vorzugsweise des 1,3-Butadien-haltigen Stroms in einem oder bevorzugt in mehreren hintereinandergeschalteten erfmdungsgemäßen Reaktoren durchgeführt werden. Die Reaktoren können dabei adiabatisch oder polytrop betrieben werden.

Die Leerrohrgeschwindigkeiten der Flüssigphase kann in weiten Bereichen variieren. Insbesondere kann sie über den laminaren Bereich deutlich hinausgehen. Bevorzugte Leerrohrgeschwindigkeiten mit welchen das erfindungsgemäße Verfahren, insbesondere die selektive Hydrierung von Butadien-haltigen Strömen durchgeführt werden kann, betragen von 50 bis 700 $m^3/m^2/h$, bevorzugt von 100 bis 450 $m^3/m^2/h$. Die Leerrohrgeschwindigkeiten kann beim Vorhandensein mehrerer Reaktoren in den verschiedenen Reaktoren gleich oder verschieden sein.

Die Dispergierwirkung der Statikmischer der erfindungsgemäßen Vorrichtung nimmt mit steigender Querschnittsbelastung zu. Im Falle, dass mehr Gas in den Reaktor eingespeist wird, als in der zugeführten Flüssigkeit löslich ist, kann mit Hilfe der Leerrohrgeschwindigkeit die Größe der in der Flüssigkeit dispergierten Gasblasen (nach Verlassen des Mischers) gesteuert werden. Daher ist es zweckmäßig, bei hohen Gas- zu Flüssigkeit- Verhältnissen z.B. im "pulse flow" höhere Leerrohrgeschwindigkeiten einzustellen. Die dispergierten Gasblasen weisen im erfmdungsgemäßen Verfahren vorzugsweise mittlere berechnete Sauter - Durchmesser (Klaus Sattler: Thermische Trennverfahren, 2. Auflage, S. 527-528, VCH- Verlag) zwischen 0,001 bis 5 mm, vorzugsweise zwischen 0,1 bis 3 mm und besonders bevorzugt von 0,1 bis 1 mm auf.

Die folgenden Beispiele sollen das erfmdungsgemäße Verfahren unter Verwendung der erfindungsgemäßen Vorrichtung erläutern, ohne die Anwendungsbreite einzuschränken, die sich aus der Beschreibung und den Patentansprüchen ergibt.

**Beispiel 1: (Vergleichsbeispiel)**

Die selektive Hydrierung des Butadiens aus einem $C_4$ Strom (Zusammensetzung vgl. Tab. 1) erfolgte in einer Anlage, die einen Festbettreaktor aufweist. In dem Reaktor befand sich ein Palladium - Trägerkatalysator (0,1 Gew.-% Pd auf $Al_2O_3$, Hersteller Fa. Degussa, Typ-Bezeichnung H14171). Die Katalysatorschüttung war mit einer ca. 30 cm hohen Inertmaterial Schicht (Interpak 15 mm, Fa. VFF) bedeckt. Der Reaktor wies ein Verhältnis Festbetthöhe zum Durchmesser von 2,6 auf. Er wurde als Schlaufenreaktor mit eigenem abgekühlten Reaktoraustrag, mit einem Verhältnis Zulauf zu Kreislaufstrom von ca. 15 betrieben. Dabei stellte sich eine Lineargeschwindigkeit der Flüssigkeit von ca. 332 $m^3/(m^2 \cdot h)$ ein. Die Edukte: flüssiges $C_4$ und reiner Wasserstoff wurden mittels kegelförmig ausgebildeten Verteilerringen aufgegeben. Die Temperatur am Reaktoreingang betrug ca. 35 °C, der Druck 9 bar. Im Zulauf zur Hydrierung wurde ein molares Verhältnis Wasserstoff zu Butadien von 0,91 eingestellt. Unter den Reaktionsbedingungen (Temperatur, Druck) lag der prozentuale molare Anteil des im $C_4$ gelösten Wasserstoffes im Vergleich zu angebotenen Menge bei 20 %. Die Zusammensetzung des Austrages aus dem Reaktor zeigt Spalte 2 der Tabelle 1. Die erreichte Buten Selektivität im 1.Reaktor betrug 98,6 % bei einem Butadien Umsatz von 88,4 %. Der erforderliche Butadien Endumsatz erfolgte im 2.Reaktor.

**Tabelle 1: Verteilung der $C_4$ Kohlenwasserstoffe in den Strömen**

|  | $C_4$-Einsatzstrom [Gew.-%] | Produkt des 1. Reaktors [Gew.-%] |
|---|---|---|
| Butadien | 48,2 | 5,6 |
| 1-Buten | 15,5 | 39,5 |
| cis-2-Buten | 3,3 | 11,7 |
| trans-2-Buten | 4,5 | 14,1 |
| Isobuten | 21,1 | 21,1 |
| Isobutan | 1,4 | 1,4 |
| n-Butan | 6,0 | 6,6 |

**Beispiel 2 gemäß der Erfindung**

Die Anlage zu selektiven Hydrierung des Butadiens wurde hinsichtlich der Kapazität um Faktor 3,5 vergrößert. Das gewählte Verhältnis Festbetthöhe zum Durchmesser betrug im Reaktor 1,8, womit eine 1,44-fache Verkleinerung des Schlankheitsgrades erfolgte. Der im Durchmesser deutlich vergrößerte Reaktor wurde mit der erfindungsgemäßen Verteilereinrichtung (139 Statikmischer pro $m^2$, Typ 3/4" KMS 4 der Fa. Kenics) ausgestattet. Zwischen dem Verteiler und dem Katalysatorbett wurde eine 30 cm hohe Inertschicht (Interpak 15 mm, Fa. VFF) eingebracht.

Von dem sonstigen Aufbau der Anlage mit dem Reaktor, der als Schlaufenreaktor mit abgekühlten Austrag ausgeführt und mit Katalysator gemäß Beispiel 1 befüllt war, war die Anlage analog zu der Anlage aus dem Vergleichspeispiel.

Bei einer Reaktoreingangstemperatur im Reaktor von 30 °C, einem Druck von 9,2 bar, einem molaren Verhältnis Wasserstoff zu Butadien im Zulaufstrom von 0,9, einem Verhältnis Zulauf zu Kreislaufstrom von ca. 17, einer Lineargeschwindigkeit der Flüssigkeit von ca. 415 $m^3/(m^2 {}_* h)$ wurden, die in der Tabelle 2 dargestellten Ergebnisse erzielt. Der prozentuale Anteil des im $C_4$-Strom gelösten Wasserstoffes im Vergleich zur angebotenen Menge lag im Reaktor bei 21%. Die erreichte Selektivität hinsichtlich der Butene (Zielprodukt) betrug 99,7 % bei einem Butadien Umsatz von 88,1 %. Der erforderliche Endumsatz des Butadiens erfolgte im 2. Reaktor.

**Tabelle 2: Verteilung der $C_4$ Kohlenwasserstoffe in den Strömen**

|  | $C_4$-Einsatzstrom [Gew.-%] | Produkt des 1. Reaktors [Gew.-%] |
|---|---|---|
| Butadien | 47,8 | 5,7 |
| 1-Buten | 13,4 | 39,9 |
| cis-2-Buten | 3,9 | 8,2 |
| trans-2-Buten | 5,1 | 16,3 |
| Isobuten | 20,9 | 20,9 |
| Isobutan | 1,5 | 1,5 |
| n-Butan | 7,4 | 7,5 |

Wie der Vergleich beider Beispiele zeigt, konnte durch den Einsatz des erfindungsgemäßen Reaktors mit dem erfindungsgemäßen Verteilerboden mit Statikmischern trotz einer deutlichen Verkleinerung des Schlankheitsgrades eine gleichbleibende, ja sogar eine leicht verbesserte Selektivität bei einem vergleichbaren Umsatz erreicht werden. Die Verbesserung der Selektivität wurde trotz einer deutlichen Vergrößerung des Reaktordurchmessers erzielt. Dies führt zu einer deutlichen Steigerung der Wirtschaftlichkeit des Prozesses.

**Patentansprüche**

1.  Reaktor zur Durchführung von Reaktionen, bei denen zumindest drei Phasen vorliegen und zumindest ein gasförmiges Edukt und zumindest ein flüssiges Edukt im Gleichstrom an einem im Festbett angeordneten Katalysator zu einem oder mehreren Produkt(en) umgesetzt werden, wobei der Reaktor zumindest eine Zone aufweist, in welcher der Katalysator im Festbett vorliegt und eine von dieser Zone durch einen Löcher aufweisenden Verteilerboden, dessen Größe dem Reaktorquerschnitt entspricht, abgetrennte Zone aufweist, in welcher die flüssigen und gasförmigen Edukte in den Reaktor eintreten,
**dadurch gekennzeichnet,**
**dass** der Reaktor einen Schlankheitsgrad von kleiner 3 aufweist und dass der Verteilerboden Statikmischer aufweist, die auf zumindest einer Seite des Verteilerbodens in den Löchern angeordnet sind.

**2.** Reaktor nach Anspruch 1,
**dadurch gekennzeichnet,**
**dass** die Anzahl der Statikmischer je Quadratmeter des Reaktorquerschnitts 70 bis 500 beträgt.

**3.** Reaktor nach Anspruch 2,
**dadurch gekennzeichnet,**
**dass** die Anzahl der Statikmischer je Quadratmeter 120 bis 280 beträgt.

**4.** Reaktor nach einem der Ansprüche 1 bis 3,
**dadurch gekennzeichnet,**
**dass** die Statikmischer gleichmäßig verteilt sind.

**5.** Reaktor nach Anspruch 4,
**dadurch gekennzeichnet,**
**dass** drei benachbarte Statikmischer in Form eines gleichseitigen Dreiecks angeordnet sind.

**6.** Reaktor nach einem der Ansprüche 1 bis 5
**dadurch gekennzeichnet,**
**dass** er in allen Betriebsbereichen der Fahrweise eines Dreiphasenreaktors einsetzbar ist.

**7.** Verfahren zur Durchführung von Reaktionen, bei denen zumindest drei Phasen vorliegen und zumindest ein gasförmiges Edukt und zumindest ein flüssiges Edukt im Gleichstrom an einem im Festbett angeordneten Katalysator zu einem oder mehreren Produkt(en) umgesetzt werden,
**dadurch gekennzeichnet,**
**dass** das Verfahren in zumindest einem Reaktor gemäß einem der Ansprüche 1 bis 6 durchgeführt wird.

**8.** Verfahren nach Anspruch 7,
**dadurch gekennzeichnet,**
**dass** der Reaktor von oben nach unten durchströmt wird.

**9.** Verfahren nach einem der Ansprüche 7 oder 8,
**dadurch gekennzeichnet,**
**dass** das Verfahren so durchgeführt wird, dass nach Austritt aus den Statikmischern der mittlere Sauterdurchmesser der in der Flüssigkeit dispergierten Gasblasen kleiner 5 mm ist.

**10.** Verfahren nach Anspruch 9,
**dadurch gekennzeichnet,**
**dass** nach Austritt aus den Statikmischern der mittlere Sauterdurchmesser der in der Flüssigkeit dispergierten Gasblasen kleiner 1 mm ist.

**11.** Verfahren nach zumindest einem der Ansprüche 7 bis 10,
**dadurch gekennzeichnet,**
**dass** Selektivreaktionen zwischen einer Flüssigkeit und einem Gas durchgeführt werden.

**12.** Verfahren nach Anspruch 11,
**dadurch gekennzeichnet,**
**dass** Verfahren eine Hydrierung ist.

**13.** Verfahren nach zumindest einem der Ansprüche 7 bis 12,
**dadurch gekennzeichnet,**

**dass** Butadien oder Butadien-haltige Ströme zu linearen Butenen oder Gemischen mit linearen Butenen hydriert wird/werden.

14. Verfahren nach Anspruch 13,
    **dadurch gekennzeichnet,**
    **dass** als Katalysator ein Palladium aufweisender Katalysator eingesetzt wird.

15. Verfahren nach Anspruch 13 oder 14,
    **dadurch gekennzeichnet,**
    **dass** ein Butadien-haltiger Strom als flüssiges Edukt eingesetzt wird, welches von 5 bis 100 Gew.% an mehrfach ungesättigten Olefinen aufweist.

16. Verfahren nach Anspruch 15,
    **dadurch gekennzeichnet,**
    **dass** der Eduktstrom vor dem Eintritt in einen ersten Reaktor mit einem weiteren Strom so abgemischt wird, dass ein Butadien-haltiger Strom erhalten wird, der kleiner als 20 Gew.% an Butadien aufweist.

17. Verfahren nach zumindest einem der Ansprüche 13 bis 16,
    **dadurch gekennzeichnet,**
    **dass** als gasförmiges Edukt zur Hydrierung weniger als die stöchiometrisch notwendige Menge an Wasserstoff zugeführt wird.

**Claims**

1. Reactor for carrying out reactions in which at least three phases are present and at least one gaseous starting material and at least one liquid starting material are reacted in cocurrent over a fixed-bed catalyst to give one or more product(s), with the reactor having at least one zone in which the catalyst is present as a fixed bed and a zone whose size corresponds to the reactor cross section and which is separated from the first zone(s) by a distributor plate provided with holes and in which the liquid and gaseous starting materials enter the reactor, **characterized in that** the reactor has a length-to-diameter ratio of less than 3 and **in that** the distributor plate is provided with static mixers which are located in the holes on at least one side of the distributor plate.

2. Reactor according to Claim 1, **characterized in that** the number of static mixers per square meter of the reactor cross section is from 70 to 500.

3. Reactor according to Claim 2, **characterized in that** the number of static mixers per square meter is from 120 to 280.

4. Reactor according to any of Claims 1 to 3, **characterized in that** the static mixers are uniformly distributed.

5. Reactor according to Claim 4, **characterized in that** three adjacent static mixers are arranged in the shape of an equilateral triangle.

6. Reactor according to any of Claims 1 to 5, **characterized in that** it can be used in all modes of operation of a three-phase reactor.

7. Process for carrying out reactions in which at least three phases are present and at least one gaseous starting material and at least one liquid starting material are reacted in cocurrent over a fixed-bed catalyst to give one or more product(s), **characterized in that** the process is carried out in at least one reactor according to any of Claims 1 to 6.

8. Process according to Claim 7, **characterized in that** the reactants flow through the reactor from the top downward.

9. Process according to Claim 7 or 8, **characterized in that** the process is carried out so that the mean Sauter diameter of the gas bubbles dispersed in the liquid after exit from the static mixers is less than 5 mm.

10. Process according to Claim 10, **characterized in that** the mean Sauter diameter of the gas bubbles dispersed in the liquid after exit from the static mixers is less than 1 mm.

11. Process according to at least one of Claims 7 to 10, **characterized in that** selective reactions between a liquid and a gas are carried out.

12. Process according to Claim 11, **characterized in that** the process is a hydrogenation.

13. Process according to at least one of Claims 7 to 12, **characterized in that** butadiene or butadiene-containing streams is/are hydrogenated to linear butenes or mixtures comprising linear butenes.

14. Process according to Claim 13, **characterized in that** a palladium-containing catalyst is used as catalyst.

15. Process according to Claim 13 or 14, **characterized in that** a butadiene-containing stream is used as liquid starting material which contains from 5 to 100% by weight of multiply unsaturated olefins.

16. Process according to Claim 15, **characterized in that** the feed stream is mixed with a further stream before entry into the first reactor so as to give a butadiene-containing stream which contains less than 20% by weight of butadiene.

17. Process according to at least one of Claims 13 to 16, **characterized in that** less than the stoichiometrically required amount of hydrogen is fed in as gaseous starting material for the hydrogenation.

## Revendications

1. Réacteur destiné à la mise en oeuvre de réactions, dans lequel sont présentes au moins trois phases et on fait réagir au moins un produit de départ gazeux et au moins un produit de départ liquide en co-courant sur un catalyseur disposé en lit fixe pour obtenir un ou plusieurs produit(s), le réacteur comportant au moins une zone, dans laquelle se trouve le catalyseur en lit fixe, et une zone séparée de cette zone par un plateau séparateur, comportant des trous, dont la taille correspond à la section transversale du réacteur, dans laquelle les produits de départ liquide(s) et gazeux pénètrent dans le réacteur,
**caractérisé en ce que**
le réacteur présente un degré d'élancement inférieur à 3 et **en ce que** le plateau séparateur comporte des mélangeurs statiques qui sont répartis sur au moins une face du plateau séparateur.

2. Réacteur selon la revendication 1,
**caractérisé en ce que**
le nombre des mélangeurs statiques par mètre carré de la section transversale du réacteur vaut de 70 à 500.

3. Réacteur selon la revendication 2,
**caractérisé en ce que**
le nombre des mélangeurs statiques par mètre carré vaut de 120 à 280.

4. Réacteur selon l'une quelconque des revendications 1 à 3,
**caractérisé en ce que**
les mélangeurs statiques sont répartis régulièrement.

5. Réacteur selon la revendication 4,
**caractérisé en ce que**
trois mélangeurs statiques voisins sont disposés en forme d'un triangle équilatéral.

6. Réacteur selon l'une quelconque des revendications 1 à 5,
**caractérisé en ce que**
le mode de fonctionnement d'un réacteur triphasique est utilisable dans toutes les zones d'exploitation.

7. Procédé pour la mise en oeuvre de réactions, dans lequel sont présentes au moins trois phases et on fait réagir au moins un produit de départ gazeux et au moins un produit de départ liquide en co-courant sur un catalyseur disposé en lit fixe pour obtenir un ou plusieurs produit(s),
**caractérisé en ce que**
le procédé est effectué dans au moins un réacteur selon l'une quelconque des revendications 1 à 6.

**8.** Procédé selon la revendication 7,
**caractérisé en ce que**
le réacteur est traversé de haut en bas.

**9.** Procédé selon la revendication 7 ou 8,
**caractérisé**
**en ce qu'**on effectue le procédé de manière qu'après sortie des mélangeurs statiques le diamètre moyen de Sauter des bulles de gaz dispersées dans le liquide est inférieur à 5 mm.

**10.** Procédé selon la revendication 9,
**caractérisé**
**en ce qu'**après sortie des mélangeurs statiques le diamètre moyen de Sauter des bulles de gaz dispersées dans le liquide est inférieur à 1 mm.

**11.** Procédé selon au moins l'une des revendications 7 à 10,
**caractérisé en ce que**
des réactions sélectives sont effectuées entre un liquide et un gaz.

**12.** Procédé selon la revendication 11,
**caractérisé en ce que**
le procédé est une hydrogénation.

**13.** Procédé selon au moins l'une des revendications 7 à 12,
**caractérisé**
**en ce qu'**on soumet du butadiène ou des courants contenant du butadiène à une hydrogénation en butènes linéaires ou mélanges comportant des butènes linéaires.

**14.** Procédé selon la revendication 13,
**caractérisé**
**en ce qu'**on utilise comme catalyseur un catalyseur comportant du palladium.

**15.** Procédé selon la revendication 13 ou 14,
**caractérisé**
**en ce qu'**on utilise comme produit de départ liquide un courant contenant du butadiène, qui comporte de 5 à 100 % en poids d'oléfines polyinsaturées.

**16.** Procédé selon la revendication 15,
**caractérisé**
**en ce qu'**avant l'entrée dans un premier réacteur on mélange le courant de produit de départ avec un autre courant de manière à obtenir un courant contenant du butadiène, qui comporte moins de 20 % en poids de butadiène.

**17.** Procédé selon au moins l'une des revendications 13 à 16,
**caractérisé**
**en ce qu'**en tant que produit de départ gazeux pour l'hydrogénation on introduit une quantité d'hydrogène inférieure à la quantité stoechiométriquement requise.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5882610 A
- US 6093373 A

**In der Beschreibung aufgeführte Nicht-Patentliteratur**

- **BAEMS ; HOFMANN ; RENKEN.** Chemische Reaktionstechnik. Georg Thieme Verlag, 1999, 264-267
- Ullmann's Encyclopedia of Industrial Chemistry. vol. B4, 309-320
- Ullmann's Encyclopedia of Industrial Chemistry. vol. B4, 310
- **KLAUS SATTLER.** Thermische Trennverfahren. VCH- Verlag, 527-528